# EUROPÄISCHE PATENTANMELDUNG

(11) **EP 1 920 956 A2**
(43) Veröffentlichungstag der Anmeldung: **14.05.2008**
(21) Anmeldenummer: 07020377.3
(22) Anmeldetag: 18.10.2007
(51) Int. Cl.: B60H 3/00, B60H 1/00, F24F 11/00

(54) **Klimaanlage für ein Kraftfahrzeug**

(30) Priorität: 11.11.2006 DE 102006053230
(71) Anmelder: GM Global Technology Operations, Inc., Detroit, MI 48265-3000 (US)
(72) Erfinder: Matthes, Markus, Dr., 50739 Köln (DE)
(74) Vertreter: Daniel, Ulrich W.P.

(57) **Zusammenfassung**

Die Erfindung betrifft eine Klimaanlage für ein Kraftfahrzeug, umfassend einen Luftkanal (7), in dem stromabwärts hinter einem Verdampfer (8) ein Luftgütesensor (10) angeordnet ist.

Weiterhin betrifft die Erfindung ein Kraftfahrzeug mit dieser Klimaanlage sowie die Verwendung eines Luftgütesensors zum Trockenblasen einer Klimaanlage.

Weitere Aspekte betreffen ein Verfahren zum Betreiben einer Klimaanlage, ein Computerprogramm zum Durchführen des Verfahrens sowie Verkörperungen des Computerprogramms in Gestalt eines Computerprogramms und einer Signalfolge.

## Beschreibung

Die Erfindung betrifft eine Klimaanlage für ein Kraftfahrzeug, insbesondere für einen Pkw sowie ein Verfahren zum Betreiben einer derartigen Klimaanlage. Weiterhin betrifft die Erfindung die Verwendung eines Luftgütesensors zum Trockenblasen einer Kfz-Klimaanlage, ein Computerprogramm zur Durchführung des Verfahrens, ein zugeordnetes Computerprogramm sowie ein elektromagnetisches Signal oder eine elektromagnetische Signalfolge als Träger für ein derartiges Computerprogramm.

Klimaanlagen gehören heutzutage bei Kraftfahrzeugen, beispielsweise Pkws, nahezu zur Serienausstattung. Bei deren Einsatz kann es vorkommen, dass sich im Fahrzeuginneren ein unangenehmer Geruch einstellt. Ursache können Bakterien oder Pilze in feuchten Bereichen der Klimaanlage, zum Beispiel im Verdampfer, sein, die sich in Gestalt so genannter Geruchsnester als modriger Geruch bemerkbar machen. Ursache kann jedoch auch verbautes Aluminium sein, das bei Feuchte einen Geruch ausbilden kann, der an feuchten Zement erinnert.

Ein derartiger unangenehmer Geruch der Klimaanlage lässt sich nur schwer vertreiben. Zur Bekämpfung der Geruchsnester werden mitunter gesundheitlich nicht unbedenkliche Sprays eingesetzt, die die Bakterien oder Pilze abtöten sollen. Bekannt ist es auch, das Gebläse der Klimaanlage nach dem Abstellen des Motors stets für eine vorgegebene Zeit von beispielsweise 30 Sekunden nachlaufen zu lassen.

Klimaanlagen für Kraftfahrzeuge setzen als Kältemittel unter anderem organische Verbindungen wie FCKWs oder FKWs ein, die freigesetzt die Ozonschicht der Erdatmosphäre schädigen oder als Treibhausgase wirken können.

Auf der Suche nach einem umweltfreundlicheren Kältemittel ist verschiedentlich CO₂ (Kohlendioxid) vorgeschlagen worden. CO₂ ist allerdings in erhöhten Konzentrationen gesundheitsgefährdend und kann einen apholytischen Schock auslösen. Insofern müssen beim Einsatz von CO₂ als Kältemittel gewisse Sicherheitsvorkehrungen getroffen werden. Aus diesem Grund ist beispielsweise (Dr. Robert Mager: Safety concept for a R744 AC system, KDA Wintermeeting Saalfelden, 2006) für den Einsatz von CO₂ in Kfz-Klimaanlagen vorgeschlagen worden, dem CO₂ Duftstoffe zuzuführen, damit Fahrzeuginsassen ein eventuelles CO₂-Leck sofort wahrnehmen können.

Es ist eine Aufgabe einer Ausführungsform der Erfindung, auf gesundheitlich unbedenkliche Weise durch Kfz-Klimaanlagen bedingte unangenehme Gerüche in Kraftfahrzeugen zu beseitigen.

Eine weitere Aufgabe besteht darin, bei einer Klimaanlage mit CO₂ als Kältemittel, dem ein Duftstoff zugesetzt ist, ein eventuelles Kältemittelleck zuverlässig aufzuspüren.

Die Lösung dieser Aufgaben erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft eine Klimaanlage für ein Kraftfahrzeug. Diese umfasst einen Luftkanal, in dem stromabwärts hinter einem Verdampfer ein Luftgütesensor angeordnet ist.

Der Betrieb des Luftgütesensors umfasst nach einem zweiten Aspekt der Erfindung die Schritte des Durchführens von Luftgütemessungen mit einem Luftgütesensor und Trockenblasen eines Verdampfers der Klimaanlage durch Einschalten eines Gebläses für den Fall, dass ein Messwert des Luftgütesensors einen vorgegebenen Schwellwert unter- oder überschreitet.

Der Luftgütesensor erfasst durch die genannte Position im Luftstrom hinter dem Verdampfer auch unangenehme Gerüche, die ihren Ursprung im Verdampfer haben. So können Geruchsnester durch Bakterien- oder Pilzbefall detektiert werden. Diese Detektion ist Voraussetzung für das Bekämpfen dieser Geruchsnester. Entsprechendes gilt für die Gerüche, die durch feuchtes Aluminium hervorgerufen werden, insbesondere verbautes Aluminium im Verdampferbereich.

Weiterhin ermöglicht der im Luftstrom hinter dem Verdampfer angeordnete Luftgütesensor durch seine Lage eine sichere Erfassung eines im Kältemittel befindlichen Duftstoffs, sofern der Verdampfer ein Leck hat. Dies ist aus Sicherheitsgründen anzustreben, da der Verdampfer das einzige kältemitteldurchströmte Teil der Klimaanlage ist, das sich im Fahrzeuginnenraum befindet.

Beim Betrieb einer Kfz-Klimaanlage passiert die von außen zugeführte Luft zunächst einen Filter, bspw. einen Aktivkohlefilter, um anschließend über den Verdampfer zum Innenraum zu gelangen. Durch den Aktivkohlefilter werden unangenehme Gerüche ausgefiltert. Derartige Gerüche werden zusätzlich in einem gewissen Maße auch im Verdampfer ausgewaschen, so dass der Verdampfer in solchen Fällen auch als Filter wirkt. Der Luftgütesensor detektiert nun die Luft nach dem Verdampfer mit einem Anteil an Fremdgerüchen, wie sie tatsächlich im Kfz-Innenraum anzutreffen sind. Bei einer konventionellen Position des Luftgütesensors befindet sich dieser zwischen dem Aktivkohlefilter und dem Verdampfer. Deshalb wird bei der konventionellen Position eher der Umluftmodus der Klimaanlage eingestellt als dies bei der Erfindung der Fall sein wird. Insofern ermöglicht die neue Position des Luftgütesensors einen längeren Betrieb im Frischluftmodus.

In einer zweiten Ausführungsform ist der Luftgütesensor ausgebildet, einen im Kältemittel der Klimaanlage enthaltenen Duftstoff zu detektieren. Der Duftstoff dient dem schnellen Detektieren eines Kältemittellecks. Dies erlaubt es bei der Verwendung von CO₂ als Kältemittel, Sicherheitsmaßnahmen zum Schutz der Fahrzeuginsassen vor einer zu hohen CO₂-Konzentration im Fahrzeuginnenraum zu ergreifen.

In einer dritten Ausführungsform ist als Duftstoff Ammoniak vorgesehen.

Die Beimischung von Ammoniak als Duftstoff liefert ein Kältemittel CO₂ + Ammoniak, das bei einem Leck der Kälteanlage wegen seines charakteristischen Geruchs die Lecksuche erleichtert, wobei das Leck durch im Bereich der Klimatechnik erprobte Lecksuchgeräte detektiert werden kann. Auch zuverlässige und preiswerte Luftgütesensoren, die Ammoniak erkennen können, sind bereits vorhanden und erprobt. Es können also teure CO₂-Sensoren vermieden werden.

Ammoniak hat weiterhin einen charakteristischen Geruch und wird dadurch von vielen Personen mit Kältetechnik in Verbindung gebracht, was die Akzeptanz im Einsatz erhöht. Auch Personen mit eingeschränktem Geruchssinn können meist noch Ammoniak riechen. Hierbei ist zu beachten, dass Ammoniak leichter als Luft und CO₂ schwerer als Luft ist. Dadurch wird Ammoniak früher geruchlich wahrgenommen, als die CO₂-Konzentration in der eingeatmeten Luft steigt. Dies gewährleistet eine frühzeitige Warnung vor CO₂ durch Riechen von Ammoniak.

Ammoniak hat eine niedrige Geruchsschwelle von ca. 5 Vol. ppm, sodass ein großer Sicherheitspuffer zu Erträglichkeitsgrenze von ca. 500 - 1000 Vol. ppm gegeben ist. Dadurch können mit niedriger Beimischungskonzentration Konzentrationsgrenzen im Bereich der in Deutschland geltenden maximalen Arbeitsplatz-Konzentration (MAK) von 50 Vol. ppm eingehalten werden.

In weiteren Ausführungsformen ist der Luftgütesensor ausgebildet, von Bakterien oder Pilzen herrührende Geruchsnester im Verdampfer und/oder einen von feuchtem Aluminium herrührenden Geruch zu detektieren. Entsprechend bezieht sich der Messwert des Luftgütesensors auf derartige Gerüche. Diese Gerüche werden von den Fahrzeuginsassen meist als unangenehm und ggf. als gesundheitlich belastend empfunden, sodass deren Detektion und nachfolgende Beseitigung einen Komfortgewinn der Klimaanlage darstellt. Im erstgenannten Fall erhält man zudem eine gesündere Atemluft im Fahrzeuginneren.

Ferner ist eine Ausführungsform vorgesehen, bei der die Klimaanlage über ein Gebläse und eine elektronische Logikeinheit verfügt. Die Logikeinheit ist mit dem Luftgütesensor verbunden und erhält von diesem Messwerte. Für den Fall, dass ein Messwert des Luftgütesensors einen vorgegebenen Schwellwert über- oder unterschreitet, wird ein Gebläse zum Trockenblasen des Verdampfers ein- oder ausgeschaltet.

Im Regelfall wird das Gebläse beim Überschreiten des den unangenehmen Geruch repräsentierenden Messwerts des Luftgütesensors eingeschaltet. Bei fortschreitendem Erfolg des Trockenblasens nimmt der Geruch ab, sinkt der Messwert unter einen Schwellwert und wird das Gebläse abgeschaltet.

Der Betrieb des Luftgütesensors kann nach einer Ausführungsform des Verfahrens so erfolgen, dass das Gebläse für einen Zeitraum von ca. 30 sec bis ca. 60 sec läuft. Die Batterie wird damit nur maßvoll belastet.

Das Gebläse wird nach einer weiteren Ausführungsform des Verfahrens nach einem vorgegebenen Zeitintervall oder nach Über- oder Unterschreiten eines Messwerts des Luftgütesensors ausgeschaltet. Die Dauer des Gebläseeinsatzes richtet sich demnach am Fortschritt der Geruchsbekämpfung oder ist starr vorgegeben.

Durch das Trockenblasen des Verdampfers und weiterer Teile der Klimaanlage werden die genannten unangenehmen Gerüche gemindert oder sogar beseitigt. Bei bakteriell bedingten Geruchsnestern wird beispielsweise den Bakterien durch das Trockenblasen das feuchte Milieu und damit ihre Lebensgrundlage genommen.

Der Einsatz der Logikeinheit führt dazu, dass wirklich nur dann, wenn es olfatisch erforderlich ist, der Verdampfer trocken geblasen wird. Der Trockenblasvorgang wird im Regelfall nach dem Abstellen des Motors erfolgen. Die Zahl der Trockenblasvorgänge ist mit Zuhilfenahme des Luftgütesensors minimal, was die Kfz-Batterie schont und die Lärmbelästigungen durch ein nachlaufendes Gebläse auf ein Minimum reduziert. Dies erhöht die Akzeptanz einer Kfz-Klimaanlage beim Kunden.

Bei der Logikeinheit kann es sich um den Mikroprozessor der elektronisch gesteuerten Klimaanlage oder um einen sonstigen Logikbaustein handeln, bspw. den Bordcomputer.

Ein dritter Aspekt der Erfindung betrifft ein Kraftfahrzeug, insbesondere einen Pkw, mit einer Klimaanlage nach einem der oben beschriebenen Ausführungsformen. Ferner bezieht sich die Erfindung auf die Verwendung eines Luftgütesensors zum Trockenblasen (des Inneres) einer Kfz-Klimaanlage, beispielsweise des Verdampfers dieser Klimaanlage.

Die Durchführung des Trockenblasens erfolgt softwaregestützt unter Ablauf eines Steuer- oder Regelalgorithmus. Hierzu wird ein Computerprogramm zur Ausführung in einem Computersystem eingesetzt, beispielsweise der Elektronik der Klimaanlage, das Softwarecodeabschnitte zur Durchführung eines Verfahrens nach mindestens einem der oben genannten Ausführungsformen umfasst.

Das Computerprogramm kann auf verschiedene Weise verkörpert sein.

Eine Möglichkeit besteht in der Wahl eines Computerprogrammprodukt, das auf einem computerlesbaren Medium abgelegt ist und computerlesbare Programmmittel umfasst, die einen Computer veranlassen, ein Verfahren nach einem der oben beschriebenen Ausführungsformen durchzuführen, wenn das Programm auf einem Computer, bspw. der Elektronik der Klimaanlage, abläuft.

Eine weitere Möglichkeit der Verkörperung des Computerprogramms besteht in einem elektromagnetischen Signal oder einer elektromagnetischen Signalfolge mit aufmodulierten binären bzw. digitalen Daten, die das oben genannte Computerprogramm repräsentieren. Diese Signalfolge kann dann auf bekannte Weise entweder kabelgebunden oder per Funk übertragen werden. Im erstgenannten Fall erfolgt sie beispielsweise über fahrzeuginterne Netzwerke und unter der Verwendung von Bus-Systemen wie dem CAN-Bus.

Weitere Merkmale und Vorteile der beanspruchten Erfindung werden aus der folgenden detaillierten Beschreibung mit Bezug auf die beigefügte Zeichnung erkennbar, die nachfolgend als nicht beschränkendes Beispiel angegeben sind. Hierbei soll die Benutzung von Bezugszeichen in der Figur nicht dahingehend verstanden werden, dass die Bezugszeichen den Schutzumfang der beanspruchten Erfindung einschränken sollen.

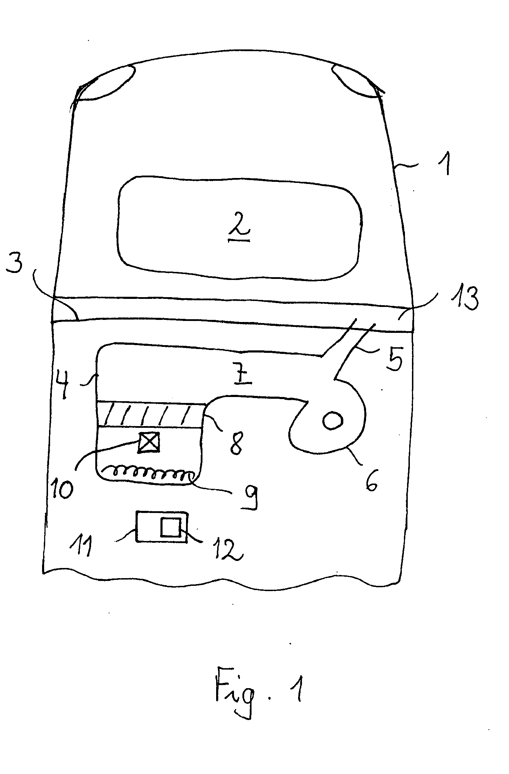

Die einzige Figur 1 zeigt in schematischer Darstellung ausschnittsweise ein Kraftfahrzeug 1 mit einem Motor 2, wobei sich hinter der Stirnwand 3 eine nicht maßstäblich dargestellte Klimaanlage 4 befindet. Luft wird vom Einlassstutzen 5 aus dem Windlauf 13 her von einem Gebläse 6 angesaugt und gelangt über einen Luftkanal 7 zum Verdampfer 8. Dort wird die Luft entweder vom Verdampfer 8 gekühlt oder von der Heizung 9 erwärmt. Stromabwärts hinter dem Verdampfer 8 ist ein Luftgütesensor 10 angeordnet. Luft strömt vom Verdampfer 8 her kommend am Luftgütesensor 10 vorbei und gelangt dann senkrecht zur Figurenebene zum Fahrzeuginneren.

Die Klimaanlage 4 wird mit Kohlendioxid als Kältemittel betrieben. Diesem ist Ammoniak als Duftstoff beigemischt, um im Fall eines Lecks eine erhöhte Konzentration an CO₂ möglichst rasch zu erfassen, damit Gegenmaßnahmen zum Schutz der Fahrzeuginsassen eingeleitet werden können. Der Luftgütesensor 10 ist zu diesem Zweck ausgebildet, Ammoniak zu detektieren. Weiterhin kann der Luftgütesensor von Bakterien herrührende Geruchsnester und von feuchtem Aluminium herrührende Gerüche detektieren. Selbstverständlich können bei Bedarf auch mehrere Luftgütesensoren eingesetzt werden.

Die Messwerte des Luftgütesensors gelangen über eine nicht gezeigte Datenleitung zu einer elektronischen Logikeinheit 11 in Gestalt der Steuer- und Regelelektronik der Klimaanlage 4. Wird Ammoniak detektiert, so werden sofort Schutzmaßnahmen eingeleitet, bspw. durch Ausgabe optischer und akustischer Warnanzeigen sowie durch automatisches Öffnen der Fenster über ihre elektrischen Fensterheber. Überschreitet ein Messwert für einen der genannten Gerüche einen vorbestimmten Schwellwert, so wird nach Abstellen des Motors das Gebläse 6 eingeschaltet. Unterschreitet der Messwert wieder den genannten Schwellwert, so wird das Gebläse wieder ausgeschaltet. Ist die damit verbundene Gebläsenachlaufzeit zu lang, zum Beispiel mehr als 3 min, so wird das Gebläse vorzeitig abgeschaltet, um die Batterie nicht über Gebühr zu belasten. Die Regelung des Trockenblasvorgangs erfolgt mithilfe eines im Arbeitsspeicher 12 der elektronischen Logikeinheit 11 ablaufenden Computerprogramms.

Aus der beschriebenen Vorgehensweise wird ersichtlich, dass das Trockenblasen nach einem Abstellen des Motors nur dann erfolgt, wenn es wirklich erforderlich ist. Dies schont die Batterie und reduziert die Geräuschbelästigung durch ein nachlaufendes Gebläse 6 auf ein Minimum.

Obwohl vorstehend eine konkrete Ausführungsform beschrieben wurde, wird der Fachmann erkennen, dass die Beschreibung dieser Ausführungsform nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Kraftfahrzeug
- 02: Motor
- 03: Stirnwand
- 04: Klimaanlage
- 05: Einlassstutzen
- 06: Gebläse
- 07: Luftkanal
- 08: Verdampfer
- 09: Heizung
- 10: Luftgütesensor
- 11: elektronische Logikeinheit
- 12: Arbeitsspeicher
- 13: Windlauf

## Patentansprüche

1. Klimaanlage für ein Kraftfahrzeug, umfassend einen Luftkanal (7), in dem stromabwärts hinter einem Verdampfer (8) ein Luftgütesensor (10) angeordnet ist.

2. Klimaanlage nach Anspruch 1, bei dem der Luftgütesensor ausgebildet ist, einen im Kältemittel der Klimaanlage (4) enthaltenen Duftstoff zu detektieren.

3. Klimaanlage nach Anspruch 2, bei dem der Luftgütesensor ausgebildet ist, Ammoniak zu detektieren.

4. Klimaanlage nach einem der vorherigen Ansprüche, bei dem der Luftgütesensor ausgebildet ist, von Bakterien herrührende Geruchsnester im Verdampfer zu detektieren.

5. Klimaanlage nach einem der vorherigen Ansprüche, bei dem der Luftgütesensor ausgebildet ist, einen von feuchtem Aluminium herrührenden Geruch zu detektieren.

6. Klimaanlage nach einem der vorherigen Ansprüche, mit einem Gebläse (6) und einer elektronischen Logikeinheit (11), die für den Fall, dass ein Messwert des Luftgütesensors einen vorgegebenen Schwellwert über- oder unterschreitet, ein Gebläse zum Trockenblasen des Verdampfers ein- oder ausschaltet.

7. Kraftfahrzeug, insbesondere Pkw, mit einer Klimaanlage (4) nach einem der vorherigen Ansprüche.

8. Verfahren zum Betreiben einer Klimaanlage, umfassend die folgenden Schritte:
a) Durchführen von Luftgütemessungen mit einem Luftgütesensor (10),
b) Trockenblasen eines Verdampfers der Klimaanlage durch Einschalten eines Gebläses (6) für den Fall, dass ein Messwert des Luftgütesensors einen vorgegebenen Schwellwert unter- oder überschreitet.

9. Verfahren nach Anspruch 7, bei dem das Gebläse für einen Zeitraum von ca. 20 sec bis ca. 60 sec betrieben wird.

10. Verfahren nach einem der vorherigen Ansprüche, bei dem das Gebläse nach einem vorgegebenen Zeitintervall oder nach Über- oder Unterschreiten eines Messwerts des Luftgütesensors ausgeschaltet wird.

11. Verfahren nach einem der vorherigen Ansprüche, bei dem sich der Messwert auf von Bakterien herrührende Geruchsnester im Verdampfer bezieht.

12. Verfahren nach einem der vorherigen Ansprüche, bei dem sich der Messwert auf einen von feuchtem Aluminium herrührenden Geruch bezieht.

13. Verwendung eines Luftgütesensors (10) zum Trockenblasen einer Klimaanlage (4) eines Kraftfahrzeugs (1).

14. Computerprogramm zur Ausführung in einem Computersystem, umfassend Softwarecodeabschnitte zur Durchführung eines Verfahrens gemäß einem der vorherigen Verfahrensansprüche.

15. Computerprogrammprodukt, abgelegt auf einem computerlesbaren Medium und computerlesbare Programmmittel umfassend, die einen Computer veranlassen, ein Verfahren nach einem der vorherigen Verfahrensansprüche durchzuführen, wenn das Programm auf einem Computer abläuft.

16. Elektromagnetisches Signal oder Signalfolge mit aufmodulierten binären Daten, die ein Datenverarbeitungsprogramm nach Anspruch 14 repräsentieren.
